# EUROPEAN PATENT APPLICATION

(11) **EP 3 018 751 A1**
(43) Date of publication of application: **11.05.2016**
(21) Application number: 14820014.0
(22) Date of filing: 27.05.2014
(51) Int. Cl.: H01M 10/052, H01M 4/13, H01M 4/139, H01M 4/62, H01M 10/0567, H01M 10/058, H01M 10/0587

(54) **NONAQUEOUS ELECTROLYTE SECONDARY CELL AND METHOD FOR PRODUCING SAME**

(30) Priority: 02.07.2013 JP 2013139150
(71) Applicant: TOYOTA JIDOSHA KABUSHIKI KAISHA, Toyota-shi, Aichi-ken 471-8571 (JP)
(72) Inventor: ONIZUKA, Hiroshi, Toyota-shi Aichi 471-8571 (JP); KONDO, Hiroki, Toyota-shi Aichi 471-8571 (JP); MURAOKA, Hiroki, Toyota-shi Aichi 471-8571 (JP); SANO, Hideki, Kadoma-shi Osaka 571-8501 (JP)
(74) Representative: Kuhnen & Wacker
(86) International application number: PCT/JP2014/063941
(87) International publication number: WO 2015/001871

(57) **Abstract**

A nonaqueous electrolyte secondary cell 10 provided by the present invention includes a nonaqueous electrolyte solution, and an electrode unit 50 that includes a positive electrode 64 and a negative electrode 84. The negative electrode 84 includes a negative electrode current collector 82 and a negative electrode mixture layer 86 that contains at least a negative electrode active material and is formed on a surface of the negative electrode current collector 82. A coating film containing at least boron (B) and sodium (Na) is formed on a surface of the negative electrode active material in the negative electrode mixture layer 86, and the ratio A/B is less than 0.1 where A is the amount [µg/cm²] of sodium (Na) and B is the amount [µg/cm²] of boron (B) that are contained in the coating film per unit area of the negative electrode mixture layer 86.

## Description

### Technical Field

The present invention relates to a nonaqueous electrolyte secondary cell and to a method for producing same.

This international application claims priority based on Japanese Patent Application No. 2013-139150 filed July 2, 2013, the entire contents of which are incorporated herein by reference.

### Background Art

Lithium ion secondary cells and other nonaqueous electrolyte secondary cells are becoming increasingly important as vehicular power sources and as power sources for, e.g., personal computers, mobile terminals, and so forth. Lithium ion secondary cells, which are lightweight and provide a high energy density, are preferred in particular as high-output vehicular power sources.

In a nonaqueous electrolyte secondary cell such as a lithium ion secondary cell, a portion of the nonaqueous electrolyte solution undergoes decomposition during charging and a coating film, i.e., an SEI (Solid Electrolyte Interface) film, of this decomposition product can be formed on the surface of the negative electrode active material (for example, natural graphite particles). This SEI film functions to protect the negative electrode active material, but it is formed through consumption of the charge carrier (for example, the lithium ion) in the nonaqueous electrolyte solution. That is, because the charge carrier is fixed into the SEI film, the charge carrier can then no longer contribute to the cell capacity. As a consequence, the formation of the SEI film in large amounts causes a decline in the capacity retention ratio (decline in cycle characteristics).

To respond to this problem, the incorporation of various additives in the nonaqueous electrolyte solution has been carried out in order to preliminarily form a stable coating film on the surface of the negative electrode active material in place of the SEI film. For example, Patent Literature 1 describes a nonaqueous electrolyte solution for a secondary cell, which contains lithium bis(oxalato)borate (Li[B(C₂O₄)₂]) as an additive.

### Citation List

### Patent Literature

[Patent Literature 1] Japanese Patent Application Laid-open No. 2005-259592

### Summary of Invention

### Technical Problem

A sodium component (for example, a sodium salt) is present as an unavoidable impurity in an electrode unit, which is provided with a positive electrode and a negative electrode, of a nonaqueous electrolyte secondary cell. As a consequence, a sodium component will dissolve into a nonaqueous electrolyte solution when the nonaqueous electrolyte solution is impregnated into a sodium component-containing electrode unit. When the lithium bis(oxalato)borate-containing nonaqueous electrolyte solution described in Patent Literature 1 is injected into such an electrode unit, the sodium ion (Na⁺) in the nonaqueous electrolyte solution diffuses faster than [B(C₂O₄)₂]⁻. Due to this, when, for example, the electrode unit is an electrode unit provided by stacking or winding a rectangular positive electrode and negative electrode, there is a tendency for sodium ion to collect in the central region of the width direction orthogonal to the length direction of the electrode unit. That is, a sodium ion concentration in this central region of the width direction becomes high. In addition, [B(C₂O₄)₂]⁻ diffuses into this central region that has a high sodium ion concentration. Due to this, frequent encounters occur between the sodium ion and [B(C₂O₄)₂]⁻ in this central region of the width direction of the electrode unit and the precipitation of Na[B(C₂O₄)₂] readily occurs. As a result, because in addition to [B(C₂O₄)₂]⁻ dissolved in the nonaqueous electrolyte solution, Na[B(C₂O₄)₂] readily precipitates in large amounts in the central region of the electrode unit, [B(C₂O₄)₂]⁻ becomes present in larger amounts in the central region than in the two end regions along the width direction of the electrode unit, and variability can then be produced in the amount of the coating film that is produced by the decomposition of [B(C₂O₄)₂]. In this manner, the resistance of the central region can become larger than those in the end regions due to the presence of the coating film produced by [B(C₂O₄)₂] decomposition in large amounts on the surface of the negative electrode active material in the central region of the width direction of the electrode unit. Accordingly, the risk arises during repetitive charge/discharge that charge carrier-derived substances (for example, a metal such as lithium metal) may end up precipitating in the central region of the electrode unit.

The present invention was created in order to solve the existing problem described above, and an object of the present invention is to provide - through the formation of a coating film having more advantageous features on the surface of the negative electrode active material - a nonaqueous electrolyte secondary cell in which the precipitation of material derived from the charge carrier is suppressed. An additional object of the present invention is to provide a method for producing this nonaqueous electrolyte secondary cell. Solution to Problem

In order to realize these objects, the present invention provides a method for producing a nonaqueous electrolyte secondary cell. That is, the herein disclosed production method includes a step of preparing a positive electrode that contains a positive electrode active material, and a negative electrode that contains a negative electrode active material, a sodium (Na) component being present as an unavoidable impurity in at least one of the prepared positive electrode and negative electrode; a step of removing at least a portion of the sodium (Na) component by washing, with a nonaqueous electrolyte solution, the electrode containing the sodium (Na) component selected from the positive electrode and negative electrode; a step of fabricating an electrode unit using the positive electrode and/or negative electrode (the positive electrode and the negative electrode, or the positive electrode or negative electrode) that has been subjected to the removal step; a step of fabricating an assembly in which the electrode unit is housed within a cell case; a step of injecting, into the cell case, a nonaqueous electrolyte solution to which lithium bis(oxalato)borate has been added; and a step of charging the assembly to a prescribed charge voltage and thereafter discharging the assembly to a prescribed discharge voltage.

In this Description a "nonaqueous electrolyte secondary cell" refers to a cell that is provided with a nonaqueous electrolyte solution (a nonaqueous electrolyte solution typically containing a supporting salt (a supporting electrolyte) in a nonaqueous solvent (an organic solvent)).

In addition, in this Description a "secondary cell" refers generally to a cell capable of repetitive charging and discharging, and is a term that includes so-called chemical cells, e.g., lithium ion secondary cells and so forth, and physical cells such as electric double-layer capacitors.

In this Description "sodium (Na) component" is a term that includes the presence of sodium alone (typically in ion form) and the presence as a compound that contains Na as a constituent element.

In the method provided by the present invention for producing a nonaqueous electrolyte secondary cell, an electrode containing a sodium (Na) component as an unavoidable impurity and selected from the positive electrode and negative electrode is washed with a nonaqueous electrolyte solution to thereby remove at least a portion of the sodium (Na) component present in this electrode; an electrode unit is fabricated using the post-removal positive electrode and/or negative electrode; and a nonaqueous electrolyte solution to which lithium bis(oxalato)borate has been added is injected into a cell case that houses the fabricated electrode unit.

Proceeding in this manner, an electrode unit is fabricated using a positive electrode and/or negative electrode after the removal of at least a portion of the sodium (Na) component, which as a consequence reduces the sodium component that dissolves into the nonaqueous electrolyte solution when this electrode unit is impregnated with a nonaqueous electrolyte solution containing lithium bis(oxalato)borate. This in turn can inhibit a rise in the sodium ion concentration in the central region of the electrode unit. The precipitation of Na[B(C₂O₄)₂] in the central region of the electrode unit is inhibited and [B(C₂O₄)₂] undergoes good dispersion (dissolves in the form of [B(C₂O₄)₂]⁻ or dissolves in the form of Na[B(C₂O₄)₂]) in the width direction of the electrode unit. Due to this, the coating film produced on the surface of the negative electrode active material by the decomposition of [B(C₂O₄)₂] can assume a state in which the variability in the amount of the coating film has been suppressed (preferably a state in which the coating film is uniform in the width direction). Because the localized concentration of current during charge/discharge is then prevented, the precipitation of charge carrier-derived substances (for example, lithium metal) is suppressed in a nonaqueous electrolyte secondary cell that is provided with an electrode unit in which the variability in the amount of the coating film has been suppressed.

In a preferred aspect of the herein disclosed production method, the sodium (Na) component is removed in the removal step so as to bring the ratio C/D to less than 0.1 where C is the dissolved amount [mmol/L] of the sodium ion that dissolves from the electrode unit into the nonaqueous electrolyte solution to which lithium bis(oxalato)borate has been added, and D is the amount of addition [mmol/L] of the lithium bis(oxalato)borate.

In accordance with this constitution, either the sodium ion and [B(C₂O₄)₂]⁻ do not encounter each other in the nonaqueous electrolyte solution or, when such an encounter does happen, dissolution occurs in the nonaqueous electrolyte solution as Na[B(C₂O₄)₂]. Due to this, the precipitation of Na[B(C₂O₄)₂] in the central region of the electrode unit is inhibited and [B(C₂O₄)₂] is then dispersed in a favorable state in the width direction of the electrode unit, and as a consequence the coating film produced by [B(C₂O₄)₂] decomposition can assume a state in which the variability in the amount of this coating film is restrained (preferably a state in which the coating film is uniform in the width direction).

In another preferred aspect of the herein disclosed production method, in the removal step the positive electrode and/or the negative electrode is immersed in a nonaqueous electrolyte solution that contains at least a lithium salt, and the positive electrode and negative electrode are thereafter washed using a nonaqueous electrolyte solution that does not contain a lithium salt.

In accordance with this constitution, the presence of impurities in the post-wash positive electrode and the post-wash negative electrode, or in the post-wash positive electrode or post-wash negative electrode, can be restrained.

In another preferred aspect of the herein disclosed production method, a separator that is to be disposed between the positive electrode and the negative electrode is additionally prepared in the preparation step, the removal step is carried out on this separator, and the electrode unit is fabricated using the separator after the removal step, and the positive electrode and/or negative electrode having been subjected to the removal step.

In accordance with this constitution, the electrode unit is fabricated using a separator after removal of the sodium (Na) component therefrom, and as a consequence the sodium component that dissolves in the nonaqueous electrolyte solution is decreased. This can provide a condition in which the variability in the amount of the coating film in the width direction of the electrode unit is restrained still further.

In another preferred aspect of the herein disclosed production method, a lithium transition metal composite oxide is used as the positive electrode active material.

Lithium transition metal composite oxides tend to contain large amounts of sodium (Na) component as an unavoidable impurity, and thus large amounts of Na[B(C₂O₄)₂] can precipitate in the central region of the electrode unit when impregnation is carried out with a nonaqueous electrolyte solution that contains lithium bis(oxalato)borate. As a consequence, the effects due to the use of the constitution of the present invention, i.e., carrying out a preliminary washing, with a nonaqueous electrolyte solution, of an electrode that contains a sodium (Na) component as an unavoidable impurity, can be notably exhibited when a lithium transition metal composite oxide is used.

In another preferred aspect of the herein disclosed production method, a styrene-butadiene rubber is used as a binder contained in the negative electrode.

A negative electrode that contains a styrene-butadiene rubber tends to contain large amounts of sodium (Na) component as an unavoidable impurity, and thus large amounts of Na[B(C₂O₄)₂] can precipitate in the central region of the electrode unit when impregnation is carried out with a nonaqueous electrolyte solution that contains lithium bis(oxalato)borate. As a consequence, the effects due to the use of the constitution of the present invention, i.e., carrying out a preliminary washing with a nonaqueous electrolyte solution of an electrode that contains a sodium (Na) component as an unavoidable impurity, can be notably exhibited when a styrene-butadiene rubber is used.

In another preferred aspect of the herein disclosed production method, a wound electrode unit is used as the electrode unit, the wound electrode unit being provided by winding an electrode unit in which a positive electrode formed in a sheet shape and a negative electrode formed in a sheet shape are stacked, the electrode unit being wound in a longitudinal direction thereof.

In the case of a wound electrode unit having this constitution, the nonaqueous electrolyte solution undergoes impregnation toward the center region from the two end regions in the width direction of the wound electrode unit. Due to this, there is a tendency that the concentration of the sodium component in the central region of a wound electrode unit is high. Accordingly, the effects due to the use of the constitution of the present invention, i.e., carrying out a preliminary washing with a nonaqueous electrolyte solution of an electrode that contains a sodium (Na) component as an unavoidable impurity, can be notably exhibited when a wound electrode unit is used.

The present invention provides a nonaqueous electrolyte secondary cell in another aspect that realizes the previously indicated objects. That is, the herein disclosed nonaqueous electrolyte secondary cell is provided with a nonaqueous electrolyte solution, and an electrode unit that contains a positive electrode and a negative electrode. This negative electrode includes a negative electrode current collector and a negative electrode mixture layer that contains at least a negative electrode active material and is formed on the surface of the negative electrode current collector. A coating film containing at least boron (B) and sodium (Na) is formed on a surface of the negative electrode active material in the negative electrode mixture layer, and the ratio A/B is less than 0.1 where A is the amount [µg/cm²] of sodium (Na) and B is the amount [µg/cm²] of boron (B) that are contained in the coating film per unit area of the negative electrode mixture layer.

In this nonaqueous electrolyte secondary cell, a coating film containing at least boron and sodium is formed on the surface of the negative electrode active material in the negative electrode mixture layer, and the ratio A/B between the amount A of this sodium and the amount B of the boron is less than 0.1. Due to this, the coating film produced on the surface of the negative electrode active material is in a state in which the variability in the amount of this coating film has been suppressed (preferably a state in which the coating film is uniform in the width direction of the electrode unit). Because the localized concentration of current during charge/discharge is then prevented, the precipitation of charge carrier-derived substances (for example, lithium metal) is suppressed in a nonaqueous electrolyte secondary cell that is provided with an electrode unit in which the variability in the amount of the coating film has been suppressed. This nonaqueous electrolyte secondary cell can be favorably produced by the above-described production method of the present invention.

In a preferred aspect of the herein disclosed nonaqueous electrolyte secondary cell, the positive electrode includes a positive electrode current collector and a positive electrode mixture layer that contains at least a positive electrode active material and is formed on a surface of the positive electrode current collector, and the positive electrode active material is a lithium transition metal composite oxide. In another preferred aspect, the negative electrode contains a binder in the negative electrode mixture layer, and the binder is a styrene-butadiene rubber. In another preferred aspect, the electrode unit further includes a separator disposed between the positive electrode and the negative electrode. In another preferred aspect, the nonaqueous electrolyte solution contains lithium bis(oxalato)borate.

With any of the herein disclosed nonaqueous electrolyte secondary cells, or nonaqueous electrolyte secondary cells (for example, lithium ion secondary cells) obtained by any of the herein disclosed production methods, because as described above the coating film containing at least boron and sodium is formed in a preferred state (a state in which there is either no variability or little variability in the amount of the coating film) on the surface of the negative electrode active material, nonaqueous electrolyte secondary cells can be obtained in which the precipitation of charge carrier-derived substances (for example, lithium metal) is prevented and excellent cell properties are thereby exhibited. This makes possible use as a drive power source in vehicles (typically automobiles and particularly electric motor-equipped automobiles such as hybrid automobiles, electric automobiles, and fuel-cell automobiles). In addition, a vehicle equipped with a nonaqueous electrolyte secondary cell obtained by any of the herein disclosed production methods as a drive power source (this can be in the form of a cell pack in which a plurality of the cells (for example, 40 to 80) are connected typically in series) is provided as another aspect of the present invention.

### Brief Description of Drawings

FIG. 1 is a perspective view that schematically shows the outer shape of a nonaqueous electrolyte secondary cell according to an embodiment of the present invention;
FIG. 2 is a cross-sectional view along the II-II line in FIG. 1;
FIG. 3 is a cross-sectional view that schematically shows the structure of a wound electrode unit according to an embodiment of the present invention;
FIG. 4 is a flow chart for describing the nonaqueous electrolyte secondary cell production method according to an embodiment of the present invention; and
FIG. 5 is a side view that schematically shows a vehicle (automobile) provided with a nonaqueous electrolyte secondary cell according to the present invention.

### Description of Embodiments

Preferred embodiments of the present invention are described in the following. Matters required for the execution of the present invention but not particularly described in this Description can be understood as design matters for the individual skilled in the art based on the conventional art in the pertinent field. The present invention can be implemented based on the contents disclosed in this Description and the common general technical knowledge in the pertinent field.

A preferred embodiment of the herein disclosed method for producing a nonaqueous electrolyte secondary cell is described in detail using a method for producing a lithium ion secondary cell as an example; however, this should not be taken to mean that the scope of the applications of the present invention is limited by or to this type of secondary cell. For example, the present invention can also be applied to nonaqueous electrolyte secondary cells in which a different metal ion (for example, the magnesium ion) is the charge carrier.

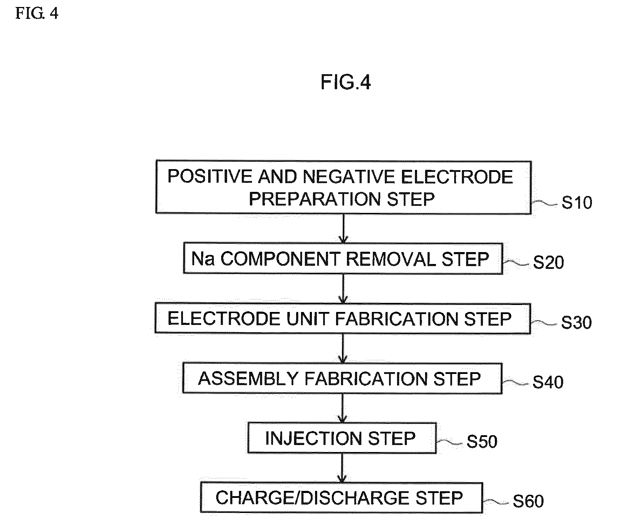

The herein disclosed method for producing a nonaqueous electrolyte secondary cell (lithium ion secondary cell) comprises, as shown in FIG. 4, a positive and negative electrode preparation step (S10), an Na component removal step (S20), an electrode unit fabrication step (S30), an assembly fabrication step (S40), an injection step (S50), and a charge/discharge step (S60).

### « The positive and negative electrode preparation step (S10) >>

The positive and negative electrode preparation step (S10) is described first. In the present embodiment, a positive electrode containing a positive electrode active material and a negative electrode containing a negative electrode active material are prepared in the positive and negative electrode preparation step. A preferred embodiment further includes the preparation of a separator that is to be disposed between the positive electrode and the negative electrode.

The positive electrode in the herein disclosed lithium ion secondary cell includes a positive electrode current collector and a positive electrode mixture layer that contains at least a positive electrode active material and is formed on a surface of this positive electrode current collector. In addition to the positive electrode active material, the positive electrode mixture layer may as necessary contain optional components such as an electroconductive material, a binder, and so forth.

As with the positive electrode current collectors used in the positive electrodes of conventional lithium ion secondary cells, aluminum or an aluminum alloy in which the main component is aluminum is used as the positive electrode current collector here. The shape of the positive electrode current collector is not particularly limited since it can vary in conformity with, inter alia, the shape of the lithium ion secondary cell, and various configurations such as foil shape, sheet shape, rod shape, plate shape, and so forth, are possible.

The positive electrode active material is a material that is capable of the insertion and extraction of the lithium ion, and can be exemplified by lithium-containing compounds that contain the element lithium and one or two or more transition metal elements (for example, lithium transition metal composite oxides). Examples are lithium nickel composite oxides (for example, LiNiO₂), lithium cobalt composite oxides (for example, LiCoO₂), lithium manganese composite oxides (for example, LiMn₂O₄), and lithium-containing ternary composite oxides such as lithium nickel cobalt manganese composite oxides (for example, LiNi_{1/3}Co_{1/3}Mn_{1/3}O₂).

Polyanion-type compounds as described by the general formula LiMPO₄ or LiMVO₄ or Li₂MSiO₄ (M in the formulas is at least one element selected from Co, Ni, Mn, and Fe) (for example, LiFePO₄, LiMnPO₄, LiFeVO₄, LiMnVO₄, Li₂FeSiO₄, Li₂MnSiO₄, Li₂CoSiO₄) may also be used as the positive electrode active material.

The positive electrode active material can be produced by various methods. Proceeding with the description using as an example the case in which the positive electrode active material is a lithium nickel cobalt manganese composite oxide, for example, the lithium nickel cobalt manganese composite oxide can be obtained by preparing a hydroxide that contains Ni, Co, and Mn in the target molar ratio (for example, a NiCoMn composite hydroxide given by Ni_{1/3}Co_{1/3}Mn_{1/3}(OH)₂), mixing this hydroxide and the lithium source so as to provide the target value for the molar ratio; and firing. The NiCoMn composite hydroxide is preferably produced by, for example, a coprecipitation method. This firing is typically carried out in an oxidizing atmosphere (for example, in the atmosphere). The firing temperature is preferably 700°C to 1000°C. Since, for example, the NiCoMn composite hydroxide is produced by the coprecipitation method using a relatively highly concentrated sodium hydroxide, the lithium nickel cobalt manganese composite oxide produced in this manner tends to contain large amounts of sodium component (for example, Na₂SO₄) as an impurity

The electroconductive material may be any electroconductive material heretofore used in lithium ion secondary cells of this type and is not limited to a particular electroconductive material. For example, a carbon material such as a carbon powder or carbon fiber can be used. A carbon powder such as the various carbon blacks (for example, acetylene black, furnace black, ketjen black, and so forth), graphite powder, and so forth can be used as the carbon powder. Among the preceding, acetylene black (AB) is an example of a preferred carbon powder. A single one of these electroconductive materials may be used by itself or a suitable combination of two or more may be used.

The same binders as used in the positive electrodes of common lithium ion secondary cells can be used as appropriate as the aforementioned binder. For example, when a solvent-based paste composition is used as the composition for forming the positive electrode mixture layer (the paste composition includes slurry-form compositions and ink-form compositions), a polymer material that dissolves in an organic solvent (a nonaqueous solvent) can be used, for example, polyvinylidene fluoride (PVDF), polyvinylidene chloride (PVDC), and so forth. Or, when a water-based paste composition is used, a water-soluble (dissolves in water) polymer material or a water-dispersible (disperses in water) polymer material is preferably used. Examples are polytetrafluoroethylene (PTFE), carboxymethyl cellulose (CMC), styrene-butadiene rubber (SBR), and so forth. The polymer materials given here as examples, in addition to their use as a binder, can also be used as a thickener or other additive for this composition.

Here, the "solvent-based paste composition" is a concept that indicates a composition in which the dispersion medium for the positive electrode active material is mainly an organic solvent (a nonaqueous solvent). For example, N-methyl-2-pyrrolidone (NMP) can be used as the organic solvent. The "water-based paste composition" is a concept that indicates a composition that uses water, or a mixed solvent in which water is the major component, as the dispersion medium for the positive electrode active material. The solvent other than water making up such a mixed solvent can be a suitable selection of one or two or more organic solvents capable of uniformly mixing with water (lower alcohols, lower ketones, and so forth).

The herein disclosed positive electrode can be favorably produced, for example, by approximately the following procedure. A paste composition for forming the positive electrode mixture layer is prepared in which the above-described positive electrode active material, electroconductive material, organic solvent-soluble binder, and so forth are dispersed in an organic solvent. The prepared composition is coated on a positive electrode current collector and dried and thereafter compressed (pressed) to produce a positive electrode provided with a positive electrode current collector and a positive electrode mixture layer formed on this positive electrode current collector. The thusly prepared positive electrode may contain a sodium (Na) component as an unavoidable impurity In the present embodiment, the sodium (Na) component present as an unavoidable impurity refers to a sodium (Na) component that can dissolve in a nonaqueous electrolyte solution. This also applies in the following unless specifically indicated otherwise.

The negative electrode in the herein disclosed lithium ion secondary cell includes a negative electrode current collector and a negative electrode mixture layer that contains at least a negative electrode active material and is formed on the surface of the negative electrode current collector. In addition to the negative electrode active material, this negative electrode mixture layer may as necessary contain optional components such as a binder, thickener, and so forth.

The negative electrode current collector here is preferably the same electroconductive member of a highly electroconductive metal as the current collectors that are used in the negative electrodes of conventional lithium ion secondary cells. For example, copper or nickel or an alloy in which these are the major component can be used. The shape of the negative electrode current collector may be the same as the shape of the positive electrode current collector.

One or two or more of the materials heretofore used in lithium ion secondary cells can be used without particular limitation as the negative electrode active material here. Examples here are particulate (or spherical or flake-shaped) carbon materials containing a graphite structure (a layered structure) in at least a portion thereof, lithium transition metal composite oxides (for example, lithium titanium composite oxides, e.g., Li₄Ti₅O₁₁ and so forth), and lithium transition metal composite nitrides. The carbon materials can be exemplified by natural graphite, artificial graphite, hard-to-graphitize carbon (hard carbon), easily graphitizable carbon (soft carbon), and so forth. The average particle diameter (median diameter d50) of the negative electrode active material is, for example, within the range of about 1 µm to 50 µm (generally 5 µm to 30 µm). This average particle diameter can be easily measured using various commercially available particle diameter distribution analyzers based on laser diffraction scattering methods. Moreover, the surface of the negative electrode active material may be coated with an amorphous carbon film. For example, a negative electrode active material in which at least a portion thereof is coated with an amorphous carbon film can be obtained by mixing pitch into a negative electrode active material and baking.

The same binders as used in the negative electrodes of common lithium ion secondary cells can be used as appropriate as the aforementioned binder. For example, when a water-based paste composition is used to form the negative electrode mixture layer, a water-soluble polymer material or water-dispersible polymer material is preferably used. Water-dispersible polymers can be exemplified by rubbers such as styrene-butadiene rubbers (SBR) and so forth, and by polyethylene oxides (PEO), vinyl acetate copolymers, and so forth. Styrene-butadiene rubbers can contain a sodium component as an impurity due to the use of sodium hydroxide as a neutralizing agent.

For example, a water-soluble or water-dispersible polymer can be used as the thickener. The water-soluble polymers can be exemplified by cellulosic polymers such as carboxymethyl cellulose (CMC), methyl cellulose (MC), cellulose acetate phthalate (CAP), hydroxypropyl methyl cellulose (HPMC), and so forth, as well as by polyvinyl alcohol (PVA) and so forth. In addition, the same materials provided above as binders can be used as appropriate.

The herein disclosed negative electrode can be favorably produced, for example, by approximately the following procedure. A paste composition for forming the negative electrode mixture layer is prepared by dispersing the above-described negative electrode active material and other optional components (the binder, thickener, and so forth) in a suitable solvent (for example, water). The prepared composition is coated on a negative electrode current collector and dried and thereafter compressed (pressed) to produce a negative electrode provided with a negative electrode current collector and a negative electrode mixture layer formed on this negative electrode current collector. The thusly prepared negative electrode may contain a sodium (Na) component as an unavoidable impurity.

The heretofore known separators can be used as the separator without particular limitation. For example, a porous resin sheet (a microporous resin sheet) can preferably be used. A porous polyolefin resin sheet of, e.g., polyethylene (PE), polypropylene (PE), and so forth, is preferred. For example, a PE sheet, PP sheet, or a sheet having a three-layer structure (PP/PE/PP structure), in which a PP layer is laminated on both sides of a PE layer, can preferably be used. Because the plasticizer used in this separator is frequently a material that contains a sodium component, a sodium component will dissolve in the nonaqueous electrolyte solution when this separator is impregnated with a nonaqueous electrolyte solution.

### « The Na component removal step (S20) »

The Na component removal step (S20) will now be described. In the Na component removal step in the present embodiment, an electrode containing a sodium (Na) component as an impurity and selected from the positive electrode and negative electrode is washed with a nonaqueous electrolyte solution to thereby remove at least a portion of the sodium (Na) component. A preferred example further includes washing a separator that contains a sodium (Na) component as an impurity to thereby remove at least a portion of the sodium (Na) component.

A nonaqueous electrolyte solution in which a supporting salt (typically a lithium salt) is dissolved in a suitable organic solvent (nonaqueous solvent) can be used as the nonaqueous electrolyte solution here. An aprotic solvent such as carbonates, esters, ethers, nitriles, sulfones, lactones, and so forth can be used as the organic solvent. The carbonates can be exemplified by ethylene carbonate (EC), propylene carbonate (PC), diethyl carbonate (DEC), dimethyl carbonate (DMC), and ethyl methyl carbonate (EMC). A single such organic solvent can be used by itself or two or more can be used in combination.

The supporting salt can be exemplified by lithium salts such as LiPF₆, LiClO₄, LiAsF₆, Li(CF₃SO₂)₂N, LiBF₄, and LiCF₃SO₃. A single such supporting salt can be used by itself or two or more can be used in combination. LiPF₆ is preferred in particular.

The aforementioned washing of the separator and electrode containing a sodium component (Na) as an impurity can be favorably carried out, for example, by approximately the following procedure. First, the Na component-containing electrode or separator (at least one of the positive electrode and negative electrode, preferably both the positive electrode and negative electrode, and more preferably all of the positive electrode, negative electrode, and separator) is immersed for approximately 10 hours to 24 hours in a suitable nonaqueous electrolyte solution (for example, a nonaqueous electrolyte solution in which 1 mol/L of LiPF₆ is dissolved as the lithium salt in a mixed solvent of EC, DMC, and EMC in a volumetric ratio of 3 : 4 : 3). By doing this, the Na component soluble in a nonaqueous electrolyte solution, among the Na component present in the electrode or separator, is dissolved in the nonaqueous electrolyte solution. After the immersion, the electrode or separator is withdrawn from the nonaqueous electrolyte solution; the surface of the electrode or separator is washed with a suitable organic solvent (for example, EMC); and drying is carried out. The washing with organic solvent is preferably carried out approximately at least three times.

### « The electrode unit fabrication step (S30) »

The electrode unit fabrication step (S30) will now be described. In the present embodiment, an electrode unit is fabricated using a positive electrode that has been subjected to the Na component removal step and/or a negative electrode that has been subjected to the Na component removal step. In a preferred embodiment, the electrode unit is fabricated additionally using a separator that has been subjected to the Na component removal step.

The electrode unit (for example, a stacked electrode unit or wound electrode unit) of the herein disclosed lithium ion secondary cell is provided with a positive electrode, negative electrode, and separator interposed between the positive electrode and negative electrode. The description here uses the example of a wound electrode unit provided with a positive electrode formed into a sheet shape, a negative electrode formed into a sheet shape, and a separator sheet; however, this should not be taken to mean that there is a limitation to this configuration.

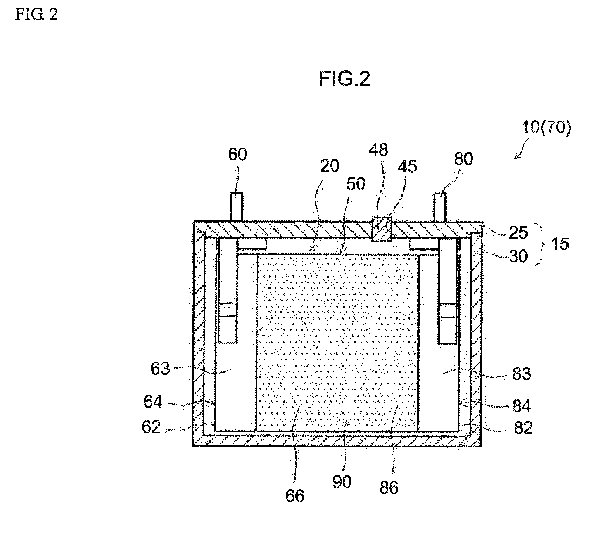

The wound electrode unit 50 according to the present embodiment is in FIG. 2. As shown in FIG. 2, the wound electrode unit 50 is a flat wound electrode unit 50 fabricated by stacking a sheet-shaped positive electrode 64 and a sheet-shaped negative electrode 84 with a total of two long separator sheets 90 interposed therebetween; winding this assembly in the longitudinal direction; and then flattening by pressing the obtained winding from a side direction.

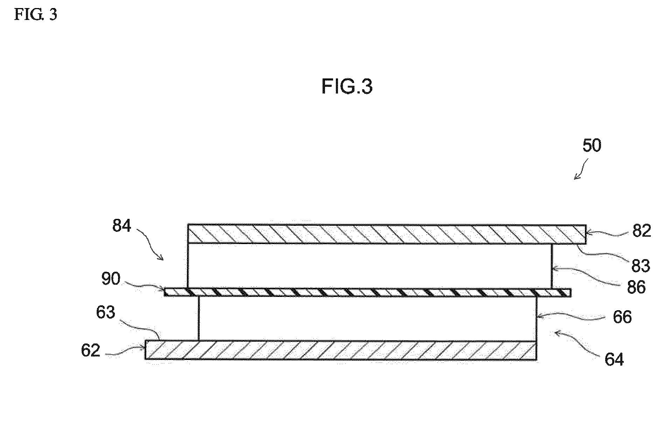

When this stacking is performed, as shown in FIG. 3 the positive electrode 64 and the negative electrode 84 are stacked together slightly shifted in the width direction such that a positive electrode mixture layer-free region (that is, a region where the positive electrode mixture layer 66 is not formed and the positive electrode current collector 62 is thereby exposed) 63 on the positive electrode 64 and a negative electrode mixture layer-free region (that is, a region where the negative electrode mixture layer 86 is not formed and the negative electrode current collector 82 is thereby exposed) 83 on the negative electrode 84 respectively extend from the two sides, considered in the width direction, of the separator sheet 90. As a result, and as shown in FIG. 2, the electrode mixture layer-free regions 63, 83 of the positive electrode 64 and the negative electrode 84 respectively extend to the outside from the wound core region (that is, the region in which the positive electrode mixture layer 66 of the positive electrode 64, the negative electrode mixture layer 86 of the negative electrode 84, and the two separator sheets 90 are densely wound) in the direction transverse to the winding direction of the wound electrode unit 50. A positive electrode terminal 60 (for example, of aluminum) is joined to this positive electrode mixture layer-free region 63, thereby electrically connecting the positive electrode terminal 60 to the positive electrode 64 of the wound electrode unit 50 that has been formed into a flat shape. Similarly, a negative electrode terminal 80 (for example, of nickel) is joined to the negative electrode mixture layer-free region 83 to thereby electrically connect the negative electrode 84 to the negative electrode terminal 80. The positive and negative electrode terminals 60, 80 can be joined to, respectively, the positive and negative electrode current collectors 62, 82 by, for example, ultrasound welding, resistance welding, and so forth.

When a nonaqueous electrolyte solution to which lithium bis(oxalato)borate has been added, infra, is injected into an electrode unit that has been fabricated using a positive electrode, negative electrode, and separator that have been subjected to the Na component removal step, the amount of dissolution C [mmol/L] of the sodium ion that dissolves into the nonaqueous electrolyte solution from the electrode unit is, for example, not more than 0.001 mmol/L (for example, 0.0001 mmol to 0.001 mmol).

### « The assembly fabrication step (S40) »

The assembly fabrication step (S40) will now be described. In the present embodiment, an assembly 70 is fabricated by housing the electrode unit 50 fabricated as described above in a cell case 15.

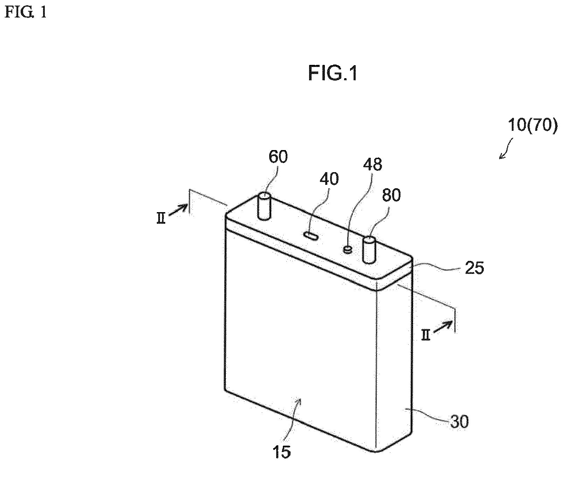

As shown in FIGS. 1 and 2, the cell case 15 in the present embodiment is a cell case of metal (for example, of aluminum; a resin or laminated film is also suitable) that is provided with a case main body (outer case) 30 - which has the shape of a flat box (typically a rectangular parallelepiped) that has a bottom and is open at the upper end - and with a lid 25, which closes the opening 20 in the case main body 30. The following are disposed in the upper end (i.e., the lid 25) of the cell case 15: a positive electrode terminal 60 that is electrically connected to the positive electrode 64 of the wound electrode unit 50 and a negative electrode terminal 80 that is electrically connected to the negative electrode 84 of the wound electrode unit 50. In addition, an injection port 45 is formed in the lid 25 in order to inject a nonaqueous electrolyte solution, infra, into the wound electrode unit 50 housed within the case main body 30 (cell case 15). After the injection step (S50) discussed below, the injection port 45 is sealed with a sealing plug 48. In the same manner as with a conventional lithium ion secondary cell, a safety valve 40 is also disposed in the lid 25 in order to release, to the exterior of the cell case 15, gas produced within the cell case 15 during abnormal cell operation. The wound electrode unit 50 is housed within the case main body 30 in a configuration in which the winding axis of the wound electrode unit 50 is laid sideways (i.e., in the direction where the opening 20 is positioned transverse to the winding axis). After this, an assembly 70 is fabricated by sealing the opening 20 in the case main body 30 with the lid 25. The lid 25 and the case main body 30 are joined by, for example, welding.

### « The injection step (S50) »

The injection step (S50) is described in the following. In the present embodiment, a nonaqueous electrolyte solution to which lithium bis(oxalato)borate (Li[B(C₂O₄)₂]) (also abbreviated below as "LiBOB") has been added is injected into the cell case for the injection step.

The nonaqueous electrolyte solution used in the injection step is a nonaqueous electrolyte solution having a supporting salt dissolved in a suitable organic solvent and can be, for example, the same as that used in the above-described Na component removal step. The same nonaqueous electrolyte solution as used in the Na component removal step is preferably used as appropriate. There are no particular limitations on the concentration of the supporting salt; however, when it is too low, the amount of charge carrier (typically the lithium ion) present in the nonaqueous electrolyte solution is deficient and the ionic conductivity will then exhibit a declining trend. When this concentration is too high, the nonaqueous electrolyte solution has a high viscosity in the temperature region at and below room temperature (for example, 0°C to 30°C) and the ionic conductivity will exhibit a declining trend. As a consequence, the concentration of the supporting salt is preferably, for example, at least 0.1 mol/L (for example, at least 0.8 mol/L) and not more than 2 mol/L (for example, not more than 1.5 mol/L).

The amount of addition D of the lithium bis(oxalato)borate is established as appropriate in accordance with the constitution of the electrode unit (for example, the density of the mixture in the negative electrode mixture layer, the porosity of the negative electrode mixture layer, and so forth).

Removal of the sodium (Na) component from the Na component-containing electrode and separator in the Na component removal step is preferably carried out so that the ratio C/D is less than 0.1 (generally from 0.0001 to 0.05, for example, from 0.0001 to 0.007) where C is the dissolved amount [mmol/L] of the sodium ion that dissolves from the electrode unit into a nonaqueous electrolyte solution to which lithium bis(oxalato)borate has been added, and D is the amount of addition [mmol/L] of the lithium bis(oxalato)borate. By doing this, the increase in the sodium ion concentration in the central region of the electrode unit is suppressed and a good dispersion of [B(C_{Z}O₄)₂] in the width direction of the electrode unit is achieved. For example, it is dissolved in the form of [B(C₂O₄)₂]⁻ or is dissolved in the form of Na[B(C₂O₄)₂].

### « The charge/discharge step (S60) »

The charge/discharge step (S60) is described in the following. In the present embodiment, a lithium bis(oxalato)borate-derived coating film is formed on the surface of the negative electrode active material in the negative electrode mixture layer 86 by charging the assembly 70 to a prescribed charge voltage.

In this step, for example, charging is carried out on the assembly 70 at a charging rate of about 0.1 C to 1 C to a prescribed voltage (for example, 3.7 V to 4.1 V) at which at least the LiBOB undergoes decomposition. By doing this, [B(C₂O₄)₂], which is well dispersed in the width direction of the electrode unit, undergoes decomposition, and a [B(C₂O₄)₂]-derived coating film is formed in a preferred state (i.e., a state in which, for the coating film formed on the surface of the negative electrode active material, unevenness in the amount of this coating film in the width direction orthogonal to the length direction of the negative electrode mixture layer 86 is suppressed) on the surface of the negative electrode active material in the negative electrode mixture layer 86. After the assembly 70 has been charged as described above, it is discharged to a prescribed voltage (for example, 3 V to 3.2 V) at a discharge rate of about 0.1 C to 1 C. In addition, this charge/discharge is preferably carried out a plurality of times (for example, three times). Carrying out such a charge/discharge process on the assembly 70 provides a usable cell, i.e., a lithium ion secondary cell (nonaqueous electrolyte secondary cell) 10. It should be noted that "1 C" refers to the amount of current that can charge, in one hour, the cell capacity (Ah) predicted from the theoretical capacity of the positive electrode.

The lithium ion secondary cell (nonaqueous electrolyte secondary cell) 10 produced by the herein disclosed production method is described in the following.

As shown in FIG. 2, the lithium ion secondary cell 10 according to the present embodiment is provided with a nonaqueous electrolyte solution and a stacked or wound electrode unit (in the present case a wound electrode unit) 50 that includes a positive electrode 64 and a negative electrode 84. While LiBOB that was not decomposed in the aforementioned charge/discharge step remains present in the nonaqueous electrolyte solution in the present embodiment, all of the LiBOB may undergo decomposition in the charge/discharge step and LiBOB may then not remain present in the nonaqueous electrolyte solution. As shown in FIG. 3, the negative electrode 84 is provided with a negative electrode current collector 82 and a negative electrode mixture layer 86 that contains at least a negative electrode active material (for example, natural graphite particles) and is formed on the surface of the negative electrode current collector 82.

A coating film derived from the aforementioned LiBOB and containing at least boron (B) and sodium (Na) is formed on the surface of the negative electrode active material present in the negative electrode mixture layer 86. Here, the ratio A/B is less than 0.1 (generally from 0.0001 to 0.05, for example, from 0.0001 to 0.039) where A is the amount [µg/cm²] of sodium (Na) and B is the amount [µg/cm²] of boron (B) that are contained in the coating film per unit area of the negative electrode mixture layer 86. A/B is typically measured based on the coating film per unit area that includes the center of the width direction of the negative electrode mixture layer 86. While not being a particular limitation, the amount of sodium (Na) contained in the coating film per unit area of the negative electrode mixture layer 86 is, for example, not more than 10 µg/cm² (for example, not more than 7 µg/cm²).

The amount of sodium (Na) [µg/cm²] and the amount of boron (B) [µg/cm²] contained in the coating film can be acquired through analysis of the coating film by, for example, high-frequency inductively coupled plasma (ICP) emission analysis, ion chromatography, and so forth. The variability in the amount of the coating film formed on the surface of the negative electrode active material can be acquired from the mapping data analytical results provided by a time-of-flight secondary ion mass spectrometer (TOF-SIMS).

In the case of production by a conventional method (i.e., cases in which an Na component dissolves in large amounts from the electrode unit into the LiBOB-containing nonaqueous electrolyte solution), a large amount of sodium has been present in the coating film formed on the surface of the negative electrode active material in the negative electrode mixture layer and a sodium-containing coating film has been formed in locally large amounts in the central region of the negative electrode mixture layer. However, the coating film formed on the surface of the negative electrode active material in the negative electrode mixture layer 86 of the herein disclosed lithium ion secondary cell 10 contains only a small amount of sodium and exhibits little variability in the coating film in the width direction of the negative electrode mixture layer 86 (in a preferred state, the coating film is formed uniformly along the width direction). As a consequence, the localized concentration of current during charge/discharge is prevented and the precipitation of charge carrier-derived substances (for example, lithium metal) is inhibited. A lithium ion secondary cell (nonaqueous electrolyte secondary cell) 10 that exhibits a high capacity retention ratio can be provided as a result.

Examples relating to the present invention are described in the following, but this should not be taken to mean that the present invention is limited to or by what is shown in these examples.

### [Preparation of positive electrode sheets]

### < Positive electrode sheet A >

LiNi_{1/3}Co_{1/3}Mn_{1/3}O₂ (Toda Kogyo Corp.) as the positive electrode active material, CB (Denki Kagaku Kogyo Kabushiki Kaisha) as the electroconductive material, and PVDF (Kureha Corporation) as the binder were weighed out to provide a mass ratio of 90 : 8 : 2, and these materials were dispersed in NMP to prepare a paste composition for forming a positive electrode mixture layer. This composition was applied on a 15 µm-thick positive electrode current collector (aluminum foil). After this, the composition was dried for 6 hours in a vacuum at 120°C followed by the execution of a rolling treatment using a roll press to fabricate a positive electrode sheet A having a positive electrode mixture layer formed on the positive electrode current collector (positive electrode preparation step). The amount of application of the composition was adjusted to provide a theoretical capacity for the positive electrode of 350 mAh. The length of the positive electrode sheet A in its length direction was 50 cm and its length in the width direction was 5.4 cm.

### < Positive electrode sheet B >

The sodium component present as an impurity was removed by washing the thusly fabricated positive electrode sheet A (Na component removal step). Thus, the positive electrode sheet A was immersed for 24 hours in a nonaqueous electrolyte solution A. The following was used as nonaqueous electrolyte solution A: LiPF₆ dissolved at 1 mol/L in a mixed solvent of ethylene carbonate (EC), dimethyl carbonate (DMC), and ethyl methyl carbonate (EMC) at a volumetric ratio of 3 : 4 : 3. This was followed by removal of the positive electrode sheet A from the nonaqueous electrolyte solution A; washing three times with EMC; and drying. The post-washing positive electrode sheet A was designated positive electrode sheet B.

### < Positive electrode sheet C >

A positive electrode sheet C was fabricated proceeding as with positive electrode sheet A, but using LiNi_{0.8}Co_{0.15}Al_{0.05}O₂ (Toda Kogyo Corp.) as the positive electrode active material in place of the LiNi_{1/3}Co_{1/3}Mn_{1/3}O₂ (Toda Kogyo Corp.).

### < Positive electrode sheet D >

Proceeding as with positive electrode sheet B, the sodium component present as an impurity was removed by washing the thusly fabricated positive electrode sheet C. The post-washing positive electrode sheet C was designated positive electrode sheet D.

### < Positive electrode sheet E >

A positive electrode sheet E was fabricated proceeding as with positive electrode sheet A, but using LiMn₂O₄ (Toda Kogyo Corp.) as the positive electrode active material in place of the LiNi_{1/3}Co_{1/3}Mn_{1/3}O₂ (Toda Kogyo Corp.).

### < Positive electrode sheet F >

Proceeding as with positive electrode sheet B, the sodium component present as an impurity was removed by washing the thusly fabricated positive electrode sheet E. The post-washing positive electrode sheet E was designated positive electrode sheet F.

### [Preparation of the negative electrode sheets]

### < Negative electrode sheet A >

Spherical graphite particles (Hitachi Chemical Co., Ltd.) as the negative electrode active material, SBR (JSR Corporation) as the binder, and CMC as the thickener were weighed out to provide a mass ratio of 98.6 : 0.7 : 0.7 and these materials were dispersed in water to produce a paste composition for forming a negative electrode mixture layer. This composition was applied on a 10 µm-thick negative electrode current collector (copper foil). After this, the composition was dried for 6 hours in a vacuum at 120°C followed by the execution of a rolling treatment using a roll press to fabricate a negative electrode sheet A having a negative electrode mixture layer formed on the negative electrode current collector (negative electrode preparation step). The amount of application of the composition was adjusted to provide a ratio between the theoretical capacity of the positive electrode and the theoretical capacity of the negative electrode of 1 (positive electrode) : 1.8 (negative electrode). The length of the negative electrode sheet A in its length direction was 52 cm and its length in the width direction was 5.6 cm.

### < Negative electrode sheet B >

Proceeding as with positive electrode sheet B, the sodium component present as an impurity was removed by washing the thusly fabricated negative electrode sheet A. The post-washing negative electrode sheet A was designated negative electrode sheet B.

### < Negative electrode sheet C >

A negative electrode sheet C was fabricated proceeding as with negative electrode sheet A, but using natural graphite particles (Hitachi Chemical Co., Ltd.) as the negative electrode active material in place of the spherical graphite particles (Hitachi Chemical Co., Ltd.).

### < Negative electrode sheet D >

Proceeding as with positive electrode sheet B, the sodium component present as an impurity was removed by washing the thusly fabricated negative electrode sheet C. The post-washing negative electrode sheet C was designated negative electrode sheet D.

### [Preparation of the separator sheets]

### < Separator sheet A >

A 20 µm-thick microporous resin sheet of polyethylene was prepared as separator sheet A.

### < Separator sheet B >

Proceeding as with positive electrode sheet B, the sodium component present as an impurity was removed by washing the thusly prepared separator sheet A. The post-washing separator sheet A was designated separator sheet B.

### [Measurement of amount of sodium ion dissolution]

The amount of dissolution of the sodium ion (Na⁺ dissolution amount) [mmol/L] that dissolves into the nonaqueous electrolyte solution A from the positive electrode sheet A fabricated as described above was measured. The positive electrode sheet A was immersed for 24 hours in 5 mL of the nonaqueous electrolyte solution A. After the immersion for 24 hours, the nonaqueous electrolyte solution A was filtered with a 0.2 µm microporous membrane filter and the amount of the sodium ion that dissolved into the nonaqueous electrolyte solution A was measured by high-frequency inductively coupled plasma (ICP) emission analysis. The amount of dissolution of the sodium ion (Na⁺ dissolution amount) [mmol/L] that dissolved into the nonaqueous electrolyte solution A from each particular sheet was similarly measured for positive electrode sheets B to F, negative electrode sheets A to D, and separator sheets A and B. The measurement results are given in Table 1.

[Table 1]

**Table 1.**

| sheet | washing | Na⁺ dissolution amount [mmol/L] |
|---|---|---|
| positive electrode sheet A | no | 0.0135 |
| positive electrode sheet B | yes | 0.0001 |
| positive electrode sheet C | no | 0.0196 |
| positive electrode sheet D | yes | 0.0001 |
| positive electrode sheet E | no | 0.0109 |
| positive electrode sheet F | yes | 0.0001 |
| negative electrode sheet A | no | 0.0287 |
| negative electrode sheet B | yes | 0.0003 |
| negative electrode sheet C | no | 0.0309 |
| negative electrode sheet D | yes | 0.0002 |
| separator sheet A | no | 0.0032 |
| separator sheet B | yes | 0.0001 |

As shown in Table 1, all of the washed sheets exhibited the amount of the sodium ion dissolution of not more than 0.0003 mmol/L, and it could thus be confirmed that the sodium component present as an impurity was almost completely removed. It was also confirmed from positive electrode sheets A, C, and E that the amount of the sodium ion dissolving into the nonaqueous electrolyte solution was different when different positive electrode active materials were used. That is, the sodium component present in the positive electrode sheet was found to vary depending on the positive electrode active material used. It was likewise confirmed, from negative electrode sheets A and C, that the amount of the sodium ion dissolving into the nonaqueous electrolyte solution was different when different negative electrode active materials were used.

### [Fabrication of lithium ion secondary cells (nonaqueous electrolyte secondary cells)]

### < Example 1 >

The positive electrode current collector was exposed by peeling 5 cm of the positive electrode mixture layer in the length direction from one edge of the length direction of the positive electrode sheet B, and an aluminum positive electrode terminal was attached by ultrasound welding to the exposed positive electrode current collector. The negative electrode current collector was exposed by peeling 2 cm of the negative electrode mixture layer in the length direction from one edge of the length direction of the negative electrode sheet B, and a nickel negative electrode terminal was attached by ultrasound welding to the exposed negative electrode current collector. The positive electrode sheet B and the negative electrode sheet B, each with the attached terminal, were wound with two separator sheets B interposed therebetween to fabricate a wound electrode unit (electrode unit fabrication step). An assembly according to Example 1 was fabricated by housing this electrode unit in a cylindrical stainless steel cell case (assembly fabrication step).

3.7 mL of a nonaqueous electrolyte solution to which lithium bis(oxalato)borate (LiBOB) had been added was then injected into the cell case of the assembly according to Example 1 (injection step). The amount of LiBOB addition D was 0.074 mmol/L. A solution in which LiPF₆ dissolved at 1.1 mol/L in a mixed solvent of EC, DMC, and EMC at a volumetric ratio of 3 : 4 : 3 was used as the nonaqueous electrolyte solution. After injection, five charge/discharge cycles were carried out repetitively on the assembly according to Example 1. The charge/discharge conditions in one cycle were as follows: under a temperature condition of 25°C, constant-current, constant-voltage charging at a charge rate of 0.2 C (70 mA) to 4.1 V; pause 10 minutes; then constant-current discharging at a discharge rate of 0.2 C (70 mA) to 3 V; and pause 10 minutes (preliminary charging step). Proceeding in this manner, a lithium ion secondary cell according to Example 1 - which was provided with a negative electrode that had a lithium bis(oxalato)borate-derived coating film formed on the surface of the negative electrode active material - was fabricated.

### < Example 2 to Example 11 >

As shown in Tables 2 and 3, lithium ion secondary cells according to Examples 2 to 11 were fabricated proceeding as with the lithium ion secondary cell according to Example 1 and using positive electrode sheets A to F, negative electrode sheets A to D, and separator sheets A and B. The Na⁺ dissolution amount C in Tables 2 and 3 is the total value of the Na⁺ dissolution amounts for the individual sheets.

[Table 2]

**Table 2.**

| example | Example 1 | Example 2 | Example 3 | Example 4 | Example 5 |
|---|---|---|---|---|---|
| positive electrode sheet | B | D | F | B | B |
| negative electrode sheet | B | B | B | D | B |
| separator sheet | B | B | B | B | A |
| Na⁻ dissolution amount C [mmol/L] | 0.0005 | 0.0005 | 0.0005 | 0.0005 | 0.0037 |
| amount of LiBOB addition D [mmol/L] | 0.074 | 0.074 | 0.074 | 0.074 | 0.074 |
| C/D | 0.007 | 0.007 | 0.007 | 0.007 | 0.05 |
| capacity retention ratio [%] | 92 | 90 | 86 | 88 | 88 |
| lithium metal precipitation | absent | absent | absent | absent | absent |

[Table 3]

**Table 3.**

| example | Example 6 | Example 7 | Example 8 | Example 9 | Example 10 | Example 11 |
|---|---|---|---|---|---|---|
| positive electrode sheet | A | C | E | A | B | A |
| negative electrode sheet | A | A | A | C | A | B |
| separator sheet | A | A | A | A | A | A |
| Na⁺ dissolution amount C [mmol/L] | 0.0454 | 0.0515 | 0.0428 | 0.0476 | 0.032 | 0.017 |
| amount of LiBOB addition D [mmol/L] | 0.074 | 0.074 | 0.074 | 0.074 | 0.074 | 0.074 |
| C/D | 0.614 | 0.696 | 0.578 | 0.643 | 0.432 | 0.229 |
| capacity retention ratio [%] | 81 | 81 | 77 | 80 | 84 | 83 |
| lithium metal precipitation | present | present | present | present | present | present |

### [Measurement of the capacity retention ratio]

1000 charge/discharge cycles were repetitively carried out on the lithium ion secondary cells according to Examples 1 to 11 fabricated as described above, and the capacity retention ratio [%] was determined after the 1000 cycles. That is, the following process was repetitively carried out 1000 times: under a temperature condition of 0°C, a step of constant-current, constant-voltage charging at a charging rate of 10 C (3.5 A) to 4.1 V, and a step of constant-current discharging at a discharge rate of 10 C (3.5 A) to 3.0 V. The percentage of the discharge capacity after the 1000 cycles with respect to the discharge capacity after 1 cycle (initial capacity) ((discharge capacity after 1000 cycles/initial capacity) x 100 (%)) was calculated to give the capacity retention ratio (%). The measurement results are given in Tables 2 and 3.

In addition, after measurement of the capacity retention ratio as described above, the lithium ion secondary cells according to Examples 1 to 11 were disassembled and the negative electrode sheet according to each individual example was removed. When this was done, the central region of the width direction of the negative electrode sheet was scored for the presence/absence of lithium metal precipitation. These measurement results are given in Tables 2 and 3.

As shown in Tables 2 and 3, the Na⁺ dissolution amount C was small relative to the amount of LiBOB added in the case of the lithium ion secondary cells according to Examples 1 to 5, and as a consequence variability was not produced in the amount of the coating film in the width direction of the negative electrode sheet. As a result, the localized concentration of current during charge/discharge was prevented and due to this the precipitation of lithium metal in the central region of the width direction of the negative electrode sheet was not observed. Due to the suppression of lithium metal precipitation, the capacity retention ratio was also shown to maintain high values with the lithium ion secondary cells according to Examples 1 to 5. A high capacity retention ratio was confirmed in particular for the lithium ion secondary cell according to Example 1. With the lithium ion secondary cells according to Examples 6 to 11, on the other hand, the Na⁺ dissolution amount C was large relative to the amount of LiBOB added (C/D ≥ 0.229) and as a consequence variability in the amount of the coating film in the width direction of the negative electrode sheet was produced. As a result, the precipitation of lithium metal on the surface of the negative electrode sheet was observed. A reduction in the capacity retention ratio was also observed due to the precipitation of lithium metal. It was confirmed based on the preceding that the precipitation of lithium metal is inhibited and a high capacity retention ratio is concomitantly realized in lithium ion secondary cells when C/D (Na⁺ dissolution amount C/amount of LiBOB addition D) is less than 0.1 (generally not more than 0.05, for example, not more than 0.07).

### [Analysis of the coating film]

The sodium (Na) and boron (B) in the coating film formed on the surface of the negative electrode active material in the negative electrode mixture layer was analyzed by high-frequency inductively coupled plasma (ICP) emission analysis for the lithium ion secondary cells according to Examples 1 and 6. Specifically, the amount [µg/cm²] of sodium (Na) contained in the coating film per unit area and the amount [µg/cm²] of boron (B) contained in the coating film per unit area were measured on each negative electrode mixture layer for a length of 15 cm in the length direction and a length of 5.4 cm in the width direction. The measurement results are shown in Table 4.

[Table 4]

**Table 4.**

| example | Example 1 | Example 6 |
|---|---|---|
| total amount of Na⁺ dissolution C [mmol/L] | 0.0005 | 0.0454 |
| amount of LiBOB addition D [mmol/L] | 0.074 | 0.074 |
| amount A of sodium in the coating film [µg/cm²] | 7 | 126 |
| amount B of boron in the coating film [µg/cm²] | 180 | 183 |
| A/B | 0.039 | 0.689 |
| capacity retention rate [%] | 92 | 81 |
| lithium metal precipitation | absent | present |

As shown in Table 4, the suppression of lithium metal precipitation and the realization of a high capacity retention ratio were confirmed for the lithium ion secondary cell according to Example 1. With this cell, variability in the amount of the coating film in the width direction of the negative electrode sheet was not produced and the amount of sodium in the coating film was small relative to the amount of boron in the coating film. With the lithium ion secondary cell according to Example 6, on the other hand, the precipitation of lithium metal and also a low capacity retention ratio were observed. With this cell, variability in the amount of the coating film in the width direction of the negative electrode sheet was produced and the amount of sodium in the coating film was large relative to the amount of boron in the coating film. It was confirmed based on the preceding that the precipitation of lithium metal is suppressed and a high capacity retention ratio is concomitantly realized in a lithium ion secondary cell when A/B (amount A of sodium in the coating film/amount B of boron in the coating film) is less than 0.1 (generally not more than 0.05, for example, not more than 0.039).

Specific examples of the present invention have been described in detail hereabove, but these are nothing more than examples and do not limit the claims. The art described in the claims encompasses various modifications and alterations of the specific examples provided as examples hereabove.

### Industrial Applicability

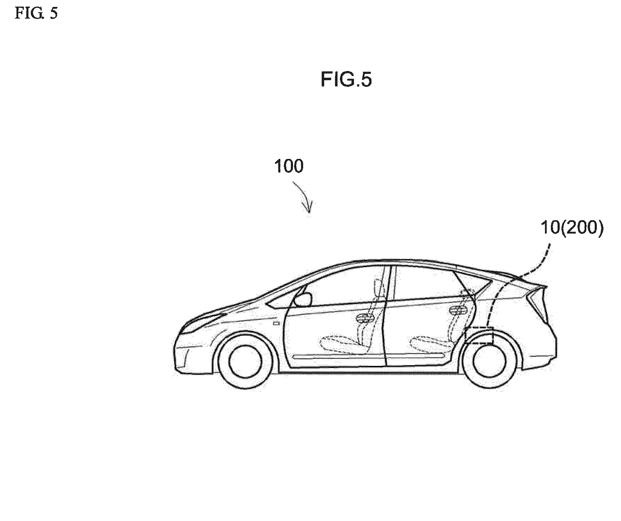

A suppression of the precipitation of charge carrier-derived substances and an excellent capacity retention ratio are exhibited by the nonaqueous electrolyte secondary cell according to the present invention or the nonaqueous electrolyte secondary cell obtained by the production method according to the present invention, which as a result can be advantageously used in particular as a power source for a motor (electric motor) mounted in a vehicle such as an automobile and so forth. Accordingly, the present invention provides, as schematically shown in FIG. 5, a vehicle (typically an automobile and particularly an automobile provided with an electric motor such as a hybrid automobile, electric automobile, and fuel automobile) 100 that is equipped with this lithium ion secondary cell 10 (typically a cell pack 200 in which a plurality of the cells 10 are connected in series) as a power source.

### Reference Signs List

- 10: lithium ion secondary cell (nonaqueous electrolyte secondary cell)
- 15: cell case
- 20: opening
- 25: lid
- 30: case main body
- 40: safety valve
- 45: injection port
- 48: sealing plug
- 50: wound electrode unit
- 60: positive electrode terminal
- 62: positive electrode current collector
- 63: positive electrode mixture layer-free region
- 64: positive electrode
- 66: positive electrode mixture layer
- 70: assembly
- 80: negative electrode terminal
- 82: negative electrode current collector
- 83: negative electrode mixture layer-free region
- 84: negative electrode
- 86: negative electrode mixture layer
- 90: separator sheet
- 100: vehicle (automobile)
- 200: cell pack

## Claims

1. A nonaqueous electrolyte secondary cell comprising a nonaqueous electrolyte solution, and an electrode unit that includes a positive electrode and a negative electrode, wherein
the negative electrode includes a negative electrode current collector and a negative electrode mixture layer that contains at least a negative electrode active material and is formed on a surface of the negative electrode current collector,
a coating film containing at least boron (B) and sodium (Na) is formed on a surface of the negative electrode active material in the negative electrode mixture layer, and
a ratio A/B is less than 0.1 where A is the amount [µg/cm²] of sodium (Na) and B is the amount [µg/cm²] of boron (B) that are contained in the coating film per unit area of the negative electrode mixture layer.

2. The nonaqueous electrolyte secondary cell according to claim 1, wherein
the positive electrode includes a positive electrode current collector and a positive electrode mixture layer that contains at least a positive electrode active material and is formed on a surface of the positive electrode current collector, and
the positive electrode active material is a lithium transition metal composite oxide.

3. The nonaqueous electrolyte secondary cell according to claim 1 or 2, wherein the negative electrode contains a binder in the negative electrode mixture layer, and the binder is a styrene-butadiene rubber.

4. The nonaqueous electrolyte secondary cell according to any one of claims 1 to 3, wherein the electrode unit further includes a separator disposed between the positive electrode and the negative electrode.

5. The nonaqueous electrolyte secondary cell according to any one of claims 1 to 4, wherein the nonaqueous electrolyte solution contains lithium bis(oxalato)borate.

6. A method for producing a nonaqueous electrolyte secondary cell, the method comprising:
a step of preparing a positive electrode that contains a positive electrode active material, and a negative electrode that contains a negative electrode active material, a sodium (Na) component being present as an unavoidable impurity in at least one of the prepared positive electrode and negative electrode;
a step of removing at least a portion of the sodium (Na) component by washing, with a nonaqueous electrolyte solution, the electrode containing the sodium (Na) component selected from the positive electrode and negative electrode;
a step of fabricating an electrode unit using the positive electrode and/or negative electrode that has been subjected to the removal step;
a step of fabricating an assembly in which the electrode unit is housed within a cell case;
a step of injecting, into the cell case, a nonaqueous electrolyte solution to which lithium bis(oxalato)borate has been added; and
a step of charging the assembly to a prescribed charge voltage and thereafter discharging the assembly to a prescribed discharge voltage.

7. The production method according to claim 6, wherein the sodium (Na) component is removed in the removal step so as to bring a ratio C/D to less than 0.1 where C is the dissolved amount [mmol/L] of the sodium ion that dissolves from the electrode unit into the nonaqueous electrolyte solution to which lithium bis(oxalato)borate has been added, and D is the amount of addition [mmol/L] of the lithium bis(oxalato)borate.

8. The production method according to claim 6 or 7, wherein, in the removal step, the positive electrode and/or the negative electrode is immersed in a nonaqueous electrolyte solution that contains at least a lithium salt, and the positive electrode and negative electrode are thereafter washed using a nonaqueous electrolyte solution that does not contain a lithium salt.

9. The production method according to any one of claims 6 to 8, wherein a separator that is to be disposed between the positive electrode and the negative electrode is additionally prepared in the preparation step, the removal step is carried out on the separator, and the electrode unit is fabricated using the separator after the removal step, and the positive electrode and/or negative electrode having been subjected to the removal step.

10. The production method according to any one of claims 6 to 9, wherein a lithium transition metal composite oxide is used as the positive electrode active material.

11. The production method according to any one of claims 6 to 10, wherein a styrene-butadiene rubber is used as a binder contained in the negative electrode.

12. The production method according to any one of claims 6 to 11, wherein a wound electrode unit is used as the electrode unit, the wound electrode unit being provided by winding an electrode unit in which a positive electrode formed in a sheet shape and a negative electrode formed in a sheet shape are stacked, the electrode unit being wound in a longitudinal direction thereof.
